## Europäisches Patentamt
## European Patent Office
## Office européen des brevets

(19)

(11) Numéro de publication: **0 012 697**
**B1**

(12) **FASCICULE DE BREVET EUROPEEN**

(45) Date de publication du fascicule du brevet: **22.12.82**

(51) Int. Cl.³: **H 02 K 49/04, B 60 T 13/74**

(21) Numéro de dépôt: **79401022.3**

(22) Date de dépôt: **14.12.79**

(54) Système d'assemblage et de fixation sur un véhicule ferroviaire d'un bobinage pour freinage par courants de Foucault.

(30) Priorité: **15.12.78 FR 7835471**

(43) Date de publication de la demande:
**25.06.80 Bulletin 80/13**

(45) Mention de la délivrance du brevet:
**22.12.82 Bulletin 82/51**

(84) Etats contractants désignés:
**AT BE CH DE FR GB IT SE**

(56) Documents cités:
**DE - A - 457 672**
**FR - A - 1 354 292**
**FR - A - 2 177 866**
**FR - A - 2 260 215**
**FR - A - 2 278 552**
**GB - A - 633 125**
**US - A - 3 711 807**

(73) Titulaire: **ANVAR Agence Nationale de Valorisation de la Recherche**
**13, rue Madeleine Michelis**
**F-92522 Neuilly-sur-Seine (FR)**

(72) Inventeur: **Dubreucq, Yvon**
**65, rue Faidherbe**
**F-59810 Lesquin (FR)**

(74) Mandataire: **Rinuy, Guy et al,**
**14, Avenue de la Grande Armée**
**F-75017 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Système d'assemblage et de fixation sur un véhicule ferroviaire d'un bobinage pour freinage par courants de Foucault

L'inventeur a décrit dans le brevet français n° 72 40012 et ses deux additions n° 73 17489 et n° 73 32877 qu'il a déposés, un procédé et un dispositif de freinage par courants de Foucault pour véhicules ou engins se déplaçant sur des rails de métal magnétique et dont les roues sont également en métal magnétique.

Sans entrer dans des détails inutiles en l'occurence, on rappellera succinctement que le dispositif de freinage suivant ces brevets comporte essentiellement des bobinages excitateurs montés de préférence autour de la moitié inférieure des roues d'au moins un paire de roues coaxiales à essieux en métal magnétique, un système d'alimentation en courant électrique continu desdits bobinages permettant d'engendrer, au moment opportun, un flux magnétique générateur de courants de Foucault retardateurs efficaces dans les roues et les rails.

L'un des problèmes majeurs à résoudre dans un tel système de freinage dynamique par courants de Foucault est de pouvoir transmettre les effets de freinage au châssis ou au bogie.

L'une des solutions proposées dans les brevets antérieurs précités de l'inventeur consiste à constituer chaque bobinage par un enroulement de spires concentriques en métal conducteur, de préférence des bandes d'aluminium oxydé de façon à réaliser, par collage entre elles, un anneau rigide dont la rigidité est due au métal conducteur lui-même. Cet anneau rigide est alors rendu solidaire du châssis ou de l'armature du bogie par des attaches fixées, d'une part, uniquement à chacune des extrémités du bobinage, d'autre part, au châssis ou à l'armature. Plus spécialement, les attaches fixées aux extrémités du bobinage sont constituées chacune d'une pièce supérieure et d'une pièce inférieure prenant ledit bobinage en sandwich, avec interposition d'une épaisseur de matériau élastique, lesdites pièces supérieure et inférieure de support étant réunies entre elles par des boulons de fixation.

Si cette solution s'est avérée convenir parfaitement pour des usages dans des conditions d'utilisation pour lesquelles les échauffements n'étaient pas trop importants, elle ne résout pas de façon parfaite le problème de la dilatation longitudinale de la bobine pour des échauffements importants par exemple de l'ordre de 200°C, sans transmettre des efforts exagérés à l'assemblage. Cette solution ne résout pas non plus le problème du rétreint thermique d'une bobine en aluminium tenue en sandwich dans des supports en acier.

On aurait pu songer à la solution classique consistant à interposer, entre les pièces de support et le châssis ou le bogie, des moyens élastiques connus tels que silent-bloc ou analogues.

Cette solution, en plus de sa complexité, ne résoudrait d'ailleurs ni le problème délicat des basses fréquences propres de l'assemblage en raison notamment de la masse suspendue encore augmentée, ni le problème de la contraction de la bobine en aluminium à basse température par rapport à celle des supports en acier.

La solution proposée dans les brevets antérieurs présente, en outre, d'autres inconvénients moins importants parmi lesquels ou peut citer:

— l'accumulation contre la bobine de boues ou d'eau projetées par la roue entre les supports provoquant, en raison de la proximité des masses métalliques, des défauts d'isolation;

— la présence de la visserie qui pose des problèmes de sécurité;

— la faible raideur mécanique de l'assemblage rendant aléatoire le montage en porte-à-faux qui s'avère pourtant quasi obligatoire en raison de la conception même des bogies;

— la double barrière thermique entre la bobine en aluminium et les supports en acier qui péjore le refroidissement par les supports.

La présente invention concerne un système d'assemblage et de fixation sur un bogie ou un châssis d'un bobinage pour freinage dynamique par courants de Foucault, qui élimine totalement les inconvénients rappelés ci-dessus des systèmes antérieurs mais, en outre, présente des avantages importants parmi lesquels on peut citer:

— une parfaite étanchéïté de la fixation entre la bobine et les supports assurant une bonne isolation électrique;

— des pièces de support monobloc, sans visserie majorant considérablement la sécurité tout en diminuant le prix de revient;

— une grande raideur de ces pièces de support monobloc permettant le montage de l'ensemble sur le châssis ou le bogie en porte-à-faux;

— un refroidissement d'ensemble de la bobine très nettement amélioré grâce à un contact thermique bobine-support parfait dû à l'augmentation des surfaces et à la diminution des épaisseurs et à l'homogénéïté des isolants.

Le système d'assemblage et de fixation selon l'invention est caractérisé par le fait qu'il comporte en combinaison:

— deux supports d'extrémité dont au moins un affecte la forme générale d'un étrier ou goulotte renversé sur l'horizontale qui vient coiffer en laissant un certain jeu la partie curviligne de la bobine ainsi qu'une partie des parties rectilignes qui la prolongent de part et d'autre; deux feuilles minces en matériau non magnétique dont chacune vient obturer la partie ouverte de l'un des supports et détermine autour de l'extrémité correspondante de la bobine une enceinte libre; des trous pour injecter une composition susceptible de donner un produit élastomère après réticulation à température appropriée; des joints d'étanchéité déterminant dans chacune desdites enceintes libres des supports des zones d'injection de la composition précitée, limitées aux parties planes de la bobine comprises à l'intérieur des supports; et au moins une plaque comportant des perforations d'accrochage du produit élastomère, qui est disposée à l'intérieur des zones d'injection dans chaque support, face à la paroi interne de ce dernier qui est comprise en regard de la partie droite de la bobine, ladite plaque étant liée au support le long d'au moins une de ses extrémités, dans le sens de la longueur et une partie est susceptible de s'écarter de la paroi interne du support, grâce à quoi, après injection de la composition dans les parties réservées de l'enceinte du support et réticulation, des blocs d'élastomère remplissent totalement lesdites parties réservées de l'enceinte, ce qui permet tant les dilatations que les retraits thermiques de l'ensemble bobine/élastomère dans le support sans perte de la possibilité de transmission des efforts survenant au cours des freinages, sans transfert d'efforts exagérés sur l'assemblage en cas d'échauffements ou de refroidissements importants et sans décollement en cas de diminution très importante de la température ambiante.

D'autres caractéristiques, avantages et particularités de la présente invention ressortiront de la description qui en est donnée ci-après en référence aux dessins schématiques annexés représentant, à titre explicatif et nullement limitatif, une forme de réalisation possible de ladite invention.

Sur ces dessins:

— la figure 1 est une vue de dessus d'un bobinage conforme à l'invention en position autour de la roue d'un véhicule ferroviaire, le bogie n'étant pas représenté pour la clarté du dessin;

— la figure 2 est une vue de détail représentant, à plus grande échelle, une coupe transversale du bobinage, faite suivant la ligne II—II de la figure 1;

— la figure 3A est une vue de détail représentant à plus grande échelle, une coupe longitudinale partielle du bobinage, faite suivant la ligne III—III de la figure 2, cette figure montrant la manière dont est montée conformément à l'invention la bobine proprement dite à l'intérieur d'un support d'extrémité;

— la figure 3B est une vue de détail en coupe analogue à celle de la figure 3A, montrant comment sont rendus possibles, conformément à l'invention, les retraits thermiques de l'ensemble bobine/élastomère dans les supports d'extrémité, sans que soit perdue la possibilité de transmission des efforts longitudinaux de freinage et sans décollement néfaste de l'ensemble bobine-élastomère par rapport audit support.

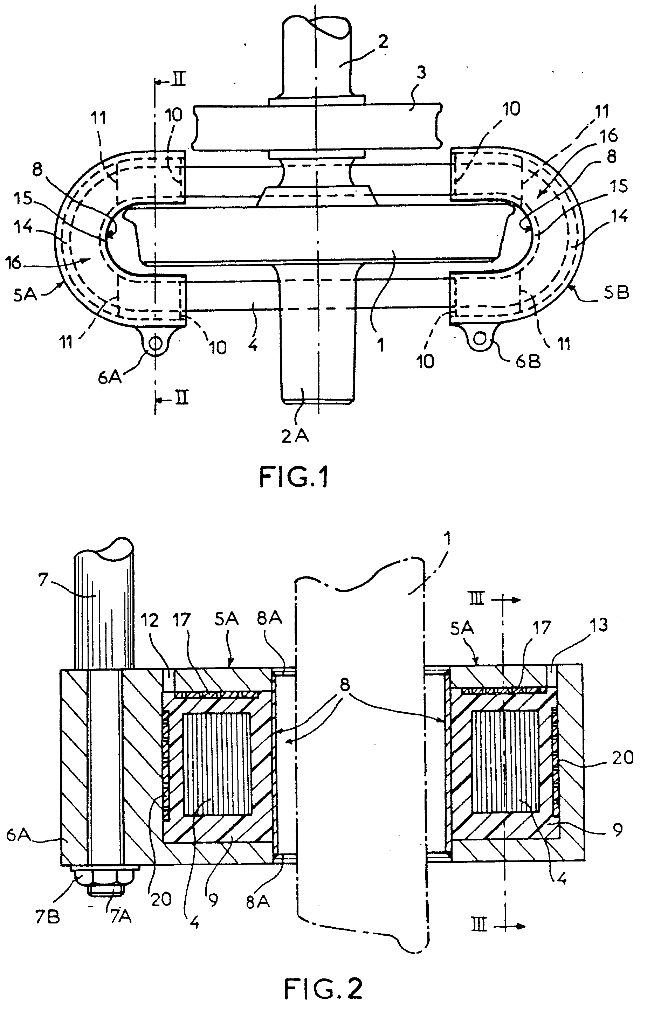

A titre d'exemple, on a représenté sur la figure 1 l'extrémité d'un essieu équipé d'un bobinage de freinage dynamique par courants de Foucault selon l'invention et d'un frein à disque. Cette figure, sur laquelle le bogie du véhicule ainsi que les roulements de l'essieu n'ont pas été représentés pour la clarté du dessin, a pour but essentiel de montrer la conception générale et le principe de base d'un bobinage suivant l'invention ainsi que son positionnement par rapport à la roue.

D'une façon plus particulière, le demi-essieu comprend une roue monobloc en acier 1, frettée sur le corps d'essieu 2, dont la fusée 2A tourillonne dans un roulement (non représenté) et un disque de frein allégé 3, d'un type quelconque connu, fretté sur l'essieu 2, la pince de freinage n'étant pas représentée.

Le bobinage excitateur conforme à l'invention, qui est monté autour de la moitié inférieure de la roue 1, est essentiellement constitué d'une bobine 4 de forme générale ovale à section rectangulaire, dont les deux extrémités sont logées, enveloppées et maintenues dans des supports $5_A$, $5_B$, en forme générale d'étrier, pourvus latéralement et à leur extrémité extérieure d'oreilles $6_A$, $6_B$ permettant la fixation de l'ensemble monobloc ainsi constitué en porte-à-faux au moyen de tirants ou de chandelles de support, tel que le tirant 7 représenté sur la figure 2, dont l'extrémité filetée $7_A$ est maintenue dans l'orifice de l'oreille $6_A$ par un écrou $7_B$.

D'une façon plus particulière, la bobine 4 est constituée, d'une manière connue en soi, par un enroulement de spires concentriques de bande d'aluminium oxydé, lesdites spires étant collées entre elles par interposition, au moment du bobinage, d'une colle sur leurs faces en regard de sorte que, après séchage et/ou cuisson de la colle, ledit bobinage constitue un anneau rigide dont la rigidité principale est due au métal conducteur lui-même. En d'autres termes, la bobine en feuille d'aluminium ainsi réalisée constitue, et c'est ce qui est important, un tore monobloc équivalent à une poutre d'aluminium de même section.

Bien entendu, la présente invention s'appliquerait de la même manière si la bobine était réalisée à l'aide d'un matériau conducteur électrique quelconque dont les spires seraient isolées et rendues solidaires les unes des autres d'une manière quelconque connue en soi, comme par exemple en fils de cuivre émaillés, imprégnés.

Quant aux supports d'extrémité $5_A$, $5_B$, ils sont en acier, monoblocs, réalisés par mécanosoudure ou venant de fonderie et ont une section transversale en forme de U renversé sur l'horizontale, ou de goulotte, comme cela apparaît clairement sur la figure 2.

Par ailleurs, et suivant une caractéristique importante de l'invention, sur laquelle on reviendra en détail plus loin, la partie interne ouverte du support lorsque la bobine 4 a été mise en place à l'intérieur dudit support de la manière qui sera décrite plus loin, est obturée au moyen d'une feuille mince en matériau non magnétique, tel qu'en acier inoxydable 8.

En dehors de son rôle de protection contre les projections diverses d'eau et de boue de la roue, contre les défauts d'isolation éventuels dus à la proximité des masses métalliques, cette feuille a pour but, en fermant la goulotte des supports $5_A$, $5_B$, de constituer des enceintes susceptibles de maintenir en place les extrémités de la bobine 4 au moyen d'une composition injectable donnant un élastomère, après réticulation à température appropriée. Le produit élastomère ainsi obtenu 9 remplit complètement le volume compris entre la paroi interne de ladite enceinte et la paroi externe de la bobine 4, comme cela apparaît distinctement sur la figure 2. La bobine 4 se trouve ainsi maintenue solidement à l'intérieur des supports d'extrémité.

Selon une autre caractéristique importante de l'invention qui a pour but de permettre la dilatation longitudinale de la bobine 4 pour des échauffements importants, par exemple de l'ordre de 200°C, sans transmettre des efforts exagérés à l'assemblage, on prévoit sur la bobine 4 des joints d'étanchéité transversaux tels que 10 et 11 qui délimitent les zones d'injection aux parties rectilignes planes de la bobine comprises à l'intérieur des supports $5_A$ et $5_B$. L'injection de la composition à l'intérieur du support s'opère par l'intermédiaire d'orifices appropriés tels que 12 et 13 que l'on voit sur la figure 2. Comme cela apparaît également à la lecture de cette dernière figure, on voit que la liaison entre les supports et la bobine est obtenue au moyen de deux blocs de produit élastomère 9 pour chaque support, limités en longueur aux parties rectilignes planes de la bobine.

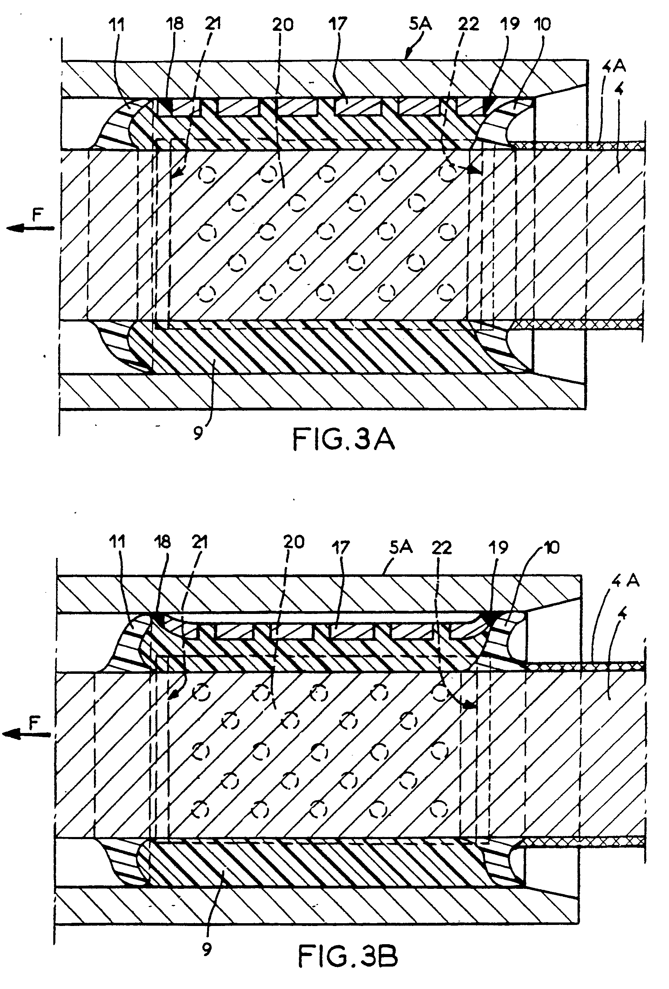

Il apparaît à la lecture des figures 1 et 3A que s'il produit une dilatation longitudinale de la bobine 4, sous l'effet d'un échauffement important, ladite bobine va pouvoir s'allonger dans le sens de la flèche F, sans qu'il y ait transmission d'efforts exagérés au support $5_A$ qui, lui, peut rester immobile par rapport au bogie, ceci grâce à la déformation du produit élastomère 9 à l'intérieur du volume délimité en longueur par les joints d'étanchéité 10 et 11 qui sont également élastiques.

La condition sine qua non est qu'il n'y ait pas de produit élastomère dans les volumes libres compris entre les parois curvilignes verticales telles que les volumes 14 et 15 de la figure 1, car ce produit est incompressible.

Par contre, il est bien évident que l'on peut éventuellement prévoir la présence de la composition donnant naissance à un produit élastomère dans les volumes haut et bas compris entre le support $5_A$, $5_B$ et les faces planes 16 de la partie courbe de la bobine 4, ceci afin d'assurer notamment une liaison thermique entre la bobine et le support. Il est évident en effet que, dans ces volumes, le produit élastomère en cas de dilatation longitudinale de la bobine ne va pas subir de compression mais uniquement un cisaillement qui n'aura pas d'effet de transmission d'efforts exagérés à l'assemblage.

Il va de soi qu'en ce qui concerne ce produit élastomère prévu sur les faces planes 16 de la partie courbe de la bobine, on peut en munir avantageusement cette dernière avant son introduction à l'intérieur des supports $5_A$ et $5_B$ et avant évidemment la fixation de la feuille 8 fermant la goulotte, fixation obtenue avantageusement au moyen d'une soudure $8_A$ (voir figure 2).

Grâce à ces blocs de produit élastomère en 16 et aux joints d'étanchéité 10 et 11 dont est également munie la bobine 4 avant son introduction à l'intérieur des supports $5_A$ et $5_B$, ladite bobine se trouve maintenue dans la position voulue par rapport auxdits supports durant toute l'opération d'injection de la composition donnant naissance au produit élastomère 9 de liaison, après sa réticulation à température appropriée.

Par ailleurs, les parties de la bobine 4 qui doivent rester à l'air libre et ne pas être protégées par les supports, sont recouvertes d'une couche protectrice $4_A$ (voir figures $3_A$ et $3_B$) d'un type quelconque approprié tel qu'une résine du genre epoxy.

On vient de voir plus haut comment l'invention permettait de résoudre le problème de la dilatation longitudinale de la bobine pour des échauffements importants sans que soient transmis à l'assemblage des efforts exagérés.

On va voir maintenant comment, grâce à une autre caractéristique essentielle de la présente invention, on peut résoudre le problème particulièrement délicat des retraits thermiques de l'ensemble bobine 4/élastomère 9 dans les supports d'extrémité sans que soit perdue la possibilité de transmission des efforts longitudinaux de freinage et sans décollement du produit élastomère du support. Le fait que le support soit en acier entraîne qu'il présente une contraction nettement inférieure à celle du matériau constituant la bobine, d'où le problème de retrait thermique à résoudre.

Il résulte en effet de ceci que si les blocs de produit élastomère 9 donnent, comme on l'a vu précédemment, la solution simple et efficace au problème des échauffements grâce à la possibilité qu'ils ont de pouvoir se déformer élastiquement sans pourtant transmettre à l'assemblage des efforts exagérés, ces mêmes blocs de produit élastomère présentent l'inconvénient d'avoir un mauvais coefficient d'adhésivité. Il en résulterait donc, tel quel, le risque, lors du retrait thermique de l'ensemble bobine 4/bloc élastomère 9, de voir le produit élastomère se détacher de la paroi du support avec les conséquences de ne plus avoir une fixation positive de la bobine dans ses supports d'extrémité.

Conformément à l'invention, on élimine totalement ce risque et ce, jusqu'à des températures très basses pouvant atteindre −40°C en permettant le rétreint de l'ensemble bobine 4/produit élastomère 9 sans que soit rompue la liaison mécanique entre le produit élastomère et le support, de la manière que l'on va décrire ci-après en se référant aux figures 2, 3A et 3B.

Préalablement à l'introduction des extrémités de la bobine 4 dans les supports 5$_A$ et 5$_B$, on munit la paroi interne supérieure de chacun des supports 5$_A$, par exemple, d'une tôle d'acier plane perforée, désignée par la référence 17. Cette tôle, qui a une épaisseur de l'ordre de 1 mm, et comporte des trous répartis en quinconce d'un diamètre de l'ordre de 2,5 mm, est sensiblement rectangulaire, la largeur et la longueur étant déterminées de façon qu'elle occupe pratiquement toute la surface comprise entre les joints 10 et 11 de la bobine 4. Suivant une caractéristique importante de l'invention, la tôle 17 est soudée sur le support, uniquement à ses extrémités, ou au moins, à une de ses extrémités, dans le sens de la longueur, par des lignes de soudures 18 et 19 (voir figures 3$_A$ et 3$_B$).

Par ailleurs, une deuxième tôle rectangulaire 20 munie de trous répartis en quinconce, est également soudée uniquement par ses extrémités 21, 22, ou au moins à une de ses extrémités, sur la paroi verticale interne du support 5$_A$ qui est opposée à la plaque 8 fermant la goulotte.

On voit immédiatement que, grâce à l'élasticité des joints d'étanchéité 10 et 11 dont est munie la bobine 4, il est aisé d'introduire ladite bobine 4 à l'intérieur de la goulotte pour l'amener, par rapport aux tôles 17 et 20, dans la position définitive représentée sur la figure 3$_A$.

Après avoir alors obturé la goulotte 5$_A$, par exemple en soudant la feuille 8 contre le support, on procède à l'injection par les orifices 12 et 13 de la composition à l'intérieur de l'enceinte. Sous la pression exercée lors de l'injection, la composition vient au contact des parois internes de l'enceinte en remplissant complètement la totalité des trous pratiqués dans les tôles 17 et 20, des évents non représentés permettant d'évacuer l'air.

Après réticulation, à température appropriée, de la composition injectable, celle-ci donne naissance au produit élastomère 9 qui remplit alors totalement l'enceinte jusque et y compris les trous des tôles 17 et 20.

Lorsqu'il y a échauffement, la bobine 4 peut se déplacer dans le sens de la flèche F par déformation du bloc de produit élastomère 9, comme on l'a décrit précédemment, sans transmission d'efforts exagérés à l'assemblage. Par ailleurs, la bobine 4 se trouvant parfaitement maintenue dans ses supports d'extrémités 5$_A$ et 5$_B$, la bobine 4 va pouvoir supporter sans danger les efforts longitudinaux auxquels elle est soumise lors d'un freinage dynamique par courants de Foucault, ceci d'autant mieux que le produit élastomère se trouve ancré dans les trous dont sont munies les tôles 17 et 20.

Si, par contre, l'ensemble est soumis comme on l'a vu à des températures très basses pouvant atteindre par exemple −40°C, le retrait thermique de l'ensemble bobine 4/élastomère 9 va provoquer tout simplement une légère déformation des tôles 17 et 20 dans leur partie centrale, sans que soit rompue pour autant la liaison mécanique entre ledit produit élastomère 9 agrippé dans les trous pratiqués dans les tôles 17 et 20 dans leur partie centrale, d'une part, et le support 5$_A$, d'autre part, auquel les tôles sont soudées par leurs extrémités.

Grâce à cette possibilité de déformation partielle des tôles, le produit élastomère 9 reste parfaitement collé sur les deux autres faces de l'enceinte de la goulotte.

Il s'avère donc que, comme dans le cas des échauffements importants, la bobine 4 se trouve aussi parfaitement maintenue dans ses supports d'extrémité, dans le cas de très basses températures, et va pouvoir là également supporter sans risque les efforts longitudinaux auxquels elle est soumise lors d'un freinage dynamique par courants de Foucault.

Il va de soi que la présente invention n'a été décrite et représentée qu'à titre d'exemple préférentiel et qu'on pourra y apporter des équivalents techniques sans pour autant sortir du cadre de ladite invention, lequel est défini dans les revendications annexées.

**Revendications**

1. Système d'assemblage et de fixation sur un châssis ou un bogie d'un véhicule ferroviaire, d'un bobinage pour le freinage dynamique par courants de Foucault du type comprenant une bobine (4) constituant une poutre monobloc rigide, comportant deux branches rectilignes parallèles réunies par deux extrémités courbes, ladite bobine étant maintenue autour de la moitié inférieure d'une roue (1) de véhicule au moyen de deux supports (5$_A$, 5$_B$) en acier fixés sur les extrémités de la bobine, ledit système d'assemblage étant caractérisé par le fait qu'il comporte en combinaison:

— deux supports d'extrémité (5$_A$, 5$_B$) dont au moins un affecte la forme générale d'un étrier ou goulotte renversé sur l'horizontale qui vient coiffer en laissant un certain jeu la partie curviligne de la bobine (4) ainsi qu'une partie des parties rectilignes qui la prolongent de part et d'autre; deux feuilles minces en matériau non magnétique (8) dont chacune vient obturer la partie ouverte de l'un des supports et détermine autour de l'extrémité correspondante de la bobine une enceinte libre; des trous (12, 13) pour injecter une composition susceptible de donner un produit élastomère (9) après réticulation à température appropriée; des joints d'étanchéité (10, 11) déterminant dans chacune desdites enceintes libres des supports des zones d'injection de la composition précitée, limitées aux parties planes de la bobine comprises à l'intérieur des supports; et au moins une plaque (17) comportant des perforations d'accrochage du produit élastomère, qui est disposée à l'intérieur des zones d'injection dans chaque support, face à la paroi interne de ce dernier qui est comprise en regard de la partie droite de la bobine, ladite plaque étant liée au support le long d'au moins une de ses extrémités, dans le sens de la longueur et une partie est susceptible de s'écarter de la paroi interne du support, grâce à quoi, après injection de la composition dans les parties réservées de l'enceinte du support et réticulation, des blocs d'élastomère remplissent totalement lesdites parties réservées de l'enceinte, ce qui permet tant les dilatations que les retraits thermiques de l'ensemble bobine/élastomère dans le support sans perte de la possibilité de transmission des efforts survenant au cours des freinages, sans transfert d'efforts exagérés sur l'assemblage en cas d'échauffements ou de refroidissements importants et sans décollement en cas de diminution très importante de la température ambiante.

2. Système d'assemblage et de fixation d'un bobinage selon la revendication 1, caractérisé par le fait que chaque support comporte en plus de la plaque (17) disposée en regard d'une paroi interne horizontale, une seconde plaque (20) disposée en regard de la paroi interne verticale disposée en regard de la partie ouverte puis obturée par la feuille mince (8) en matériau non magnétique.

3. Système d'assemblage et de fixation d'un bobinage selon la revendication 2, caractérisé par le fait que les plaques (17, 20) sont réalisées en tôle mince métallique, fixée dans chaque support uniquement le long d'au moins une de leurs extrémités (18, 19, 21, 22) par soudure.

4. Système d'assemblage et de fixation d'un bobinage selon l'une quelconque des revendications 1 à 3, caractérisé par le fait que les deux supports $(5_A, 5_B)$ sont munis latéralement sur l'une de leurs extrémités d'une oreille $(6_A, 6_B)$ permettant la fixation en porte-à-faux de l'ensemble au bogie par de simples tirants (7).

5. Système d'assemblage et de fixation d'un bobinage selon l'une quelconque des revendications 1 à 4, caractérisé par le fait que la partie curviligne plane (16) de chacune des extrémités de la bobine (4) est munie d'une couche d'élastomère qui, lorsque la bobine est en place dans le support n'est soumise éventuellement qu'à un effort de cisaillement n'ayant aucun effet néfaste de transmission d'efforts exagérés sur l'assemblage mais a l'avantage de parfaire la liaison thermique entre la bobine et le support.

6. Système d'assemblage et de fixation d'un bobinage selon l'une quelconque des revendications 1 à 5, caractérisé par le fait que les parties de la bobine non enveloppées par les supports d'extrémité sont recouvertes d'une

couche protectrice $(4_A)$ telle qu'une résine du genre époxy.

7. Système d'assemblage et de fixation d'un bobinage selon l'une quelconque des revendications 1 à 6, caractérisé par le fait que les deux supports $(5_A, 5_B)$ sont monoblocs, réalisés par mécano-soudure ou venant de fonderie.

**Claims**

1. A system for assembling and fixing to a chassis or a bogie of a railway vehicle, a winding for dynamic eddy current braking of the type comprising a coil constituting a rigid one-piece beam, comprising two parallel rectilinear branches joined by their curved ends, said coil held about the lower half of a vehicle wheel by means of two supports of steel, fixed to the ends of the coil, said assembling system being characterized in that it comprises in combination:
— two end supports $(5_A, 5_B)$ one of which at least has the general shape of a yoke or channel inverted in the horizontal plane, which will cover, while leaving some clearance, the curvilinear portion of the coil (4) as well as part of the rectilinear portions extending it on either side; two thin sheets of non magnetic material (8), each of which will close the open portion of one of the supports and determines a free enclosure about the corresponding end of the coil; holes (12, 13) for injecting a composition capable of providing an elastomeric product (9) after cross-linking at the appropriate temperature; sealing joints (10, 11) determining in each of said free enclosures supports for the injection zones of the above-mentioned composition, limited to the planar portions of the coil included within the supports; and at least one plate (17) comprising hook on perforations for the elastomeric product, and being disposed within the injection zones in each support, facing the inner wall of the latter which is comprised opposite the rectilinear portion of the coil, said plate being connected to the support along at least one of its ends in the longitudinal direction and a portion is capable of moving away from the inner wall of the support, whereby after injection of the conmposition into the reserved portions of the enclosure of the support, and cross-linking, blocks of elastomer completely fill said reserved portions of the enclosure thereby permitting both thermal dilations and contractions of the coil/elastomer assembly in the support without loss of the capacity of transmitting efforts occurring during brakings, without transfer of exaggerated efforts to the assembly in case of significant heatings or coolings, and without detachment in case of very large reduction of the ambient temperature.

2. A system for assembling and fixing a winding according to claim 1, characterized in that each support comprises, in addition to the plate (17) disposed opposite a horizontal inner wall, a second plate (20) disposed opposite the vertical inner wall disposed opposite the open portion, then closed by the thin sheet (8) of non magnetic material.

3. A system for assembling and fixing a winding according to any one of claims 1 or 2, characterized in that the plates (17, 20) are made from metallic thin sheet, secured in each support only along at least one of their ends (18, 19, 21, 22) by welding.

4. A system for assembling and fixing a winding according to any one of claims 1 to 3, characterized in that both supports ($5_A$, $5_B$) are provided laterally on one of their ends with an ear ($6_A$, $6_B$) to permit cantilevered fixing of the assembly to the bogie by simple braces (7).

5. A system for assembling and fixing a winding according to any one of the claims 1 to 4, characterized in that the planar curvilinear portion (16) of each of the ends of the coil (4) is provided with an elastomeric layer which, when the coil is put into place in the support, may possibly be submitted only to a shearing force that does not produce any adverse effect of exaggerated force transmission on the assembly but rather has the advantage of completing the thermal bond between the coil and the support.

6. A system for assembling and fixing a winding according to any one of claims 1 to 5, characterized in that the portions of the coil not enveloped by the end supports are covered with a protective layer ($4_A$) such as a resin of the epoxy type.

7. A system for assembling and fixing a winding according to any one of claims 1 to 6, characterized in that both supports ($5_A$, $5_B$) are in one piece, made by mechanowelding or produced by casting.

**Patentansprüche**

1. System zur Verbindung und Befestigung einer Wicklungsanordnung auf einem Fahr- oder Drehgestell eines Schienenfahrzeugs zur dynamischen Bremsung durch Wirbelströme mit einer Spule, die einen starren einstückigen Träger bildet, der zwei parallele geradlinige Schenkel umfaßt, die durch zwei gebogene Enden verbunden sind, wobei die Spule um die untere Hälfte eines Rades des Fahrzeugs herum mittels zweier Stützen aus Stahl gehalten ist, die an den Enden der Spule befestigt sind, dadurch gekennzeichnet, daß es in Kombination umfaßt: Zwei Endstützen ($5_A$, $5_B$), von denen zumindest eine die allgemeine Form eines Bügels oder einer Hohlkehle annimmt, der bzw. die um die Horizontale gekippt ist, die den gekrümmten Teil der Spule (4) ebenso wie einen Teil der geradlinigen Teile, die diesen auf beiden Seiten verlängern, mit einem gewissen Spiel bedeckt; zwei dünne Blätter aus nichtmagnetischem Material (8), von denen jedes den offenen Teil einer Stütze verschließt und um das entsprechende Ende der Spule herum eine freie Umhüllung festlegt; Löcher (12, 13) zum Einspritzen einer Verbindung, die geeignet ist, nach der Vulkanisation bei einer geeigneten Temperatur ein elastomeres Produkt (9) zu ergeben; Dichtungen (10, 11), die in jeder der freien Umhüllungen der Stützen Einspritzbereiche für die gennante Verbindung festlegen, die auf die ebenen Teile der Spule beschränkt sind, die im Inneren der Stütze enthalten sind; und wenigstens eine Platte (17), die Verankerungsperforationen für das elastomere Produkt umfaßt, das im Inneren der Einspritzbereiche in jeder Stütze gegenüber der Innenwand der letzteren angeordnet ist, die sich gegenüber dem geraden Teil der Spule befindet, wobei die Platte mit der Stütze entlang wenigstens eines ihrer Enden verbunden ist, und zwar in Längsrichtung, und wobei ein Teil geeignet ist, sich von der Innenwand der Stütze zu entfernen, wodurch nach Einspritzung der Verbindung in die reservierten Teile der Umhüllung der Stütze und Vulkanisation, elastomere Blöcke die reservierten Teile der Umhüllung völlig ausfüllen, was so viel thermische Ausdehnungen wie Zusammenziehungen der Baugruppe Spule/Elastomer in der Stütze ohne Verlust der Möglichkeit der Kraftübertragung, die beim Bremsen auftritt, zuläßt, und zwar ohne Übertragung übermäßiger Kräfte auf die Verbindung im Falle wesentlicher Erwärmungen oder Abkühlungen und ohne Ablösung im Falle einer sehr beträchtlichen Verringerung der Umgebungstemperatur.

2. System zur Verbindung und Befestigung einer Wicklungsanordnung nach Anspruch 1, dadurch gekennzeichnet, daß jede Stütze zusätzlich zu der Platte (17), die einer horizontalen inneren Wand gegenüber angeordnet ist, eine zweite Platte (20) umfaßt, die der vertikalen inneren Wand gegenüber angeordnet ist, die dem offenen Teil gegenüber angeordnet ist, der dann durch das dünne Blatt (8) aus nichtmagnetischem Material verschlossen wird.

3. System zur Verbindung und Befestigung einer Wicklungsanordnung nach einem der Ansprüche 1 oder 2, dadurch gekennzeichnet, daß die Platten (17, 20) aus einem dünnen Metallblech gefertigt sind, das in jeder Stütze allein entlang wenigstens eines ihrer Enden (18, 19, 21, 22) durch Schweißen befestigt ist.

4. System zur Verbindung und Befestigung einer Wicklungsanordnung nach einem der Ansprüche 1 bis 3 dadurch gekennzeichnet, daß die beiden Stützen ($5_A$, $5_B$) seitlich auf einem ihrer Enden mit einer Tragöse ($6_A$, $6_B$) versehen sind, die die hervorstehende Befestigung der Baugruppe an dem Drehgestell mit einfachen Stangen (7) gestattet.

5. System zur Verbindung und Befestigung einer Wicklungsanordnung nach einem der Ansprüche 1 bis 4, dadurch gekennzeichnet, daß der gebogene ebene Teil (16) jedes Endes der Spule (4) mit einer elastomeren Lage versehen ist, die, wenn die Spule an ihrem Platz in der Stütze ist, nur eventuellen Scherkräften unterworfen ist, die keine nachteilige Wirkung bei der Übertragung übermäßiger Kräfte auf die Verbindung, aber den Vorteil der Vervollständigung der thermischen Verbindung zwischen Spule und Stütze hat.

6. System zur Verbindung und Befestigung einer Wicklungsanordnung nach einem der Ansprüche 1 bis 5, dadurch gekennzeichnet, daß die Teile der Spule, die nicht durch die Endstützen, eingehüllt sind, von einer Schutzschicht ($4_A$) wie einem Epoxyharz bedeckt sind.

7. System zur Verbindung und Befestigung einer Wicklungsanordnung nach einem der Ansprüche 1 bis 6, dadurch gekennzeichnet, daß die zwei Stützen ($5_A$, $5_B$) einstückig sind und durch Mechanik-Schweißen oder Gießen hergestellt sind.

FIG.1

FIG.2

0012697

FIG.3A

FIG.3B